# EUROPÄISCHE PATENTSCHRIFT

(11) **EP 3 235 637 B1**
(45) Veröffentlichungstag und Bekanntmachung des Hinweises auf die Patenterteilung: **20.10.2021**
(21) Anmeldenummer: 17167596.0
(22) Anmeldetag: 21.04.2017
(51) Int. Cl.: B32B 25/08, B32B 27/12, B32B 27/30, B32B 27/32, B32B 27/34, B32B 27/36, E04D 5/06, E04D 5/10, B32B 27/28

(54) **ABDECKLAMINAT ODER -SCHICHTSYSTEM**
COVER LAMINATE OR COATING SYSTEM
LAMINÉ DE RECOUVREMENT OU SYSTÈME EN COUCHE

(30) Priorität: 21.04.2016 DE 102016107418
(43) Veröffentlichungstag der Anmeldung: 25.10.2017
(73) Patentinhaber: ICOPAL DANMARK ApS, 2730 Herlev (DK)
(72) Erfinder: SIMONIS, Udo, 63549 Ronneburg (DE); GLUECK, Johannes, 97762 Hammelburg (DE)
(74) Vertreter: Stoffregen, Hans-Herbert

(56) Entgegenhaltungen:
- EP-A1- 1 741 551
- WO-A1-00/43608

## Beschreibung

Die Erfindung bezieht sich auf ein Abdecklaminat oder -schichtsystem. Auch nimmt die Erfindung Bezug auf die Verwendung eines Abdeck- wie Dachlaminats oder -schichtsytems.

Gegenstand der Erfindung ist auch ein Verfahren zur Herstellung eines Abdecklaminats oder Schichtsystems.

Um insbesondere Gebäudeflächen gegen Witterungseinflüsse und gegen Kontaktmedien zu schützen, werden Abdichtungsbahnen aus Bitumen, Polymerbitumen, Kunststoff (überwiegend Thermoplaste) oder Elastomeren benutzt.

Bei der Sanierung von alten mit Bitumenbahnen abgedichteten Flächen (Flachdach, Ingenieurbau) können nicht bitumenverträgliche Bahnen nicht direkt auf die zu sanierende Altbitumenabdichtung gelegt werden, da es zu Wechselwirkungen zwischen der Kunststoffbahn (oftmals PVC-P-NB) und dem Bitumen in der Art kommt, dass Weichmacher (Monomerweichmacher, wie z.B. DINP, DIDP oder lineare Weichmacher) oder auch weitere flüssige Bestandteile wie ESBO oder flüssige Thermostabilisatoren in die Bitumenschicht wandern. Weiterhin kann auch die direkte Verlegung auf EPS (expandiertes Polystyrol), welches zur Isolierung eingesetzt wird, nicht möglich sein, da auch hier Wechselwirkungen zwischen der Dachbahn und der Isolierung möglich sind im Sinne der Wanderung und Migration flüchtiger oder flüssiger Bestandteile (wie z.B. Weichmacher).

Durch die Migration des Weichmachers versprödet die Dachbahn, sie verliert ihre Flexibilität, ihre Dimensionsstabilität, d. h. sie schrumpft sehr stark aufgrund des Massenverlusts und wird sehr stark empfindlich auf mechanische Belastungen (Literaturverweis: Weichmacherverlust, Bauschäden in Folge Änderung mechanischer Eigenschaften von PVC-Dachbahnen, DDH 4/87 ab Seite 34: Kurzbericht einer Forschungsarbeit (Juni 1986), ausgeführt in der Bundesanstalt für Materialprüfung, Berlin).

Aus architektonischen Gründen und um die Aufheizung der Dachfläche möglichst gering zu halten, sind in den letzten Jahren vermehrt hellfarbene Bahnen im Einsatz.

Auch wenn diese Bahnen nach DIN EN 1548 als bitumenverträglich eingestuft wurden, kommt es beim Kontakt mit Bitumen zu Verfärbungen der Oberfläche.

Diese Verfärbungen sind auf Bitumenöle (Fluxöle) bzw. andere Inhaltsstoffe zurückzuführen, die durch die Kunststoffbahn auf die Oberfläche wandern und insbesondere das Fügeverhalten und das Alterungsverhalten verschlechtern können.

Durch eine Arbeit von L. Glück aus dem Jahr 2003 "Einwirkung von Bitumen auf Kunststoff - Dach - und Dichtungsbahnen" wurde gezeigt, dass polymerweichgemachte PVC-p-Bahnen sehr beständig sind, in der Praxis aber eine Verfärbung auftritt. Weitere Bahnen auf der Basis EVA, CPE und FPO zeigen im Kontakt mit Bitumen eine Besonderheit und hier insbesondere die Bahnen auf der Basis von FPO. Diese Bahnen nehmen sehr stark die Bitumenöle auf, geben sie aber auch nach Rekonditionierung nicht wieder ab. Durch die hohe Aufnahme der Öle werden die mechanischen Werte beeinflusst. Es kommt zu einem Anquellen. Es ist davon auszugehen, dass die Dauerhaftigkeit in Mitleidenschaft gezogen wird.

Seit 1991 sind Kunststoffdach- und dichtungsbahnen mit Selbstklebeschicht (basierend auf PVC-P) auf dem Markt. Als Kaltselbstklebeschicht wird heute durchaus noch ein Bitumen-Kautschuk-Harz-Compound verwendet, jedoch gibt es auch auf anderen Materialien basierende Selbstklebeschichten, z.B. acrylatbasiert, auf Kautschukbasis, wie SBR oder auch Styrol Copolymere, wie SBS, SIS, SEBS oder SEPS. Monomer weichgemachte und daher nicht migrationsstabile Formulierungen auf der Basis von PVC-p können nicht in direkten Kontakt mit der Kaltselbstklebeschicht kommen, da es zu vorgenannten Wechselwirkungen kommt. Polymer weichgemachte Bahnen besitzen aufgrund der längerkettigen Weichmacher eine geringere Flüchtigkeit, jedoch können durch Alterung, speziell durch Hydrolyse, die Weichmacher in kurzkettige Elemente aufgespalten werden.

Hellfarbene bitumenverträgliche Bahnen können ebenso nicht mit einer solchen Masse kaltselbstklebend ausgerüstet werden, da es zu den o. g. Verfärbungen bzw. weiteren Wechselwirkungen kommt (bei FPO-Bahnen starke Massenzunahme durch Aufnahme der Bitumenöle).

Um die dunkle bzw. schwarze Farbe von Bitumenbahnen als Sichtfläche zu vermeiden, ist es bekannt, entsprechende Bahnen mit einer Licht- und UV-Strahlen undurchlässigen Abdeckschicht zu versehen, die farbig ausgebildet ist (DE-A-44 03 101). Allerdings hat sich gezeigt, dass die im Bitumen enthaltenen Öle an die Oberfläche der Deckschicht migrieren, so dass eine Fleckenbildung auftritt.

Eine Mehrschichtbahn ist der EP-A-1 500 493 zu entnehmen. Um die Migration zu unterbinden, ist vorgesehen, dass die Mehrschichtbahn eine nichtmetallische Sperrschicht aufweist, die zwischen einer äußeren Polymerschicht und einer Bitumenschicht verläuft. Dabei kann die nichtmetallische Sperrschicht basierend auf Polymeren ausgewählt aus der Gruppe Polyamid, Ethylenvinylalkohol, Polyester und/oder Gemischen dieser bestehen. Des Weiteren können in einer Schicht Verstärkungsmaterialien vorhanden sein. Bei den Verstärkungsmaterialien kann es sich um Vliese, Gelege, Gewebe und/oder um Kombinationen dieser handeln.

Der DE-A-103 34 714 ist eine Dachbahn zu entnehmen, die gebäudeseitig eine Faserschicht aufweist, die mit einer Metallisierung versehen ist, um eine Abschirmung gegen elektromagnetische Strahlung zu bieten.

Die DE-A-35 03 809 bezieht sich auf eine Dichtungsbahn, die eine imprägnierte Faserschicht aufweist, um entsprechende Dichtungsbahnen homogen verschweißen zu können.

Eine Folie mit einer dampfdichten und flüssigkeitsundurchlässigen Zwischenschicht ist aus der EP-A-0 704 297 bekannt, um zu vermeiden, dass Öle aus einer Bitumenbahn an die Oberfläche dringen, wodurch sich andernfalls eine unerwünschte Verfärbung ergäbe.

Eine mehrschichtige Dachbahn ist aus der GB-A-2 138 357 bekannt. Eine dieser Schichten kann ein Vlies sein.

Eine aus VLDPE bestehende Zwischenschicht, die Polyvenylfluorid enthalten kann, findet sich in einer mehrschichtigen Bahn nach der US-B-6,194,049. Die entsprechende Zwischenschicht ist dampfundurchlässig.

Auch eine Mehrschichtbahn nach der US-A-4,442,148 umfasst eine dampfdichte Sperrschicht, die nicht zwingend eine Zwischenschicht sein muss.

Dampfdichte Schichten eines Folien-Bitumen-Verbunds sind aus der EP-A-1 407 878 bekannt.

Eine Dachbahn nach der EP-A-1 741 551 weist eine erste Schicht zum Beispiel aus einem Polymer und eine zweite Schicht auf, die gegenüber Bitumen migrationshemmend und eine imprägnierte Fluorkunststoffschicht ist, die mit einem Vlieskunststoff als migrationshemmendes Mittel imprägniert ist.

Der WO-A-00/43608 ist eine Dachbahn zu entnehmen, die aus einer äußeren aus Polymer bestehenden Schicht, einem über eine Klebeschicht mit dieser verbundenen Barriereschicht und einem Vlies besteht, das zum einen mit der Barriereschicht und zum anderen mit einem Dach über Klebeschichten verbunden ist.

Der vorliegenden Erfindung liegt die Aufgabe zugrunde, ein Abdeck- wie Dachlaminat oder -schichtsystem, die Verwendung eines solchen sowie ein Verfahren zur Herstellung einer Dachabdeckung zur Verfügung zu stellen, bei dem eine Interaktion zwischen den angrenzenden Flächen, insbesondere zwischen den Materialien einer abzudeckenden Fläche wie die eines Daches und z.B. einer Dachbahn, wie Abdichtungsbahn, unterbleibt, zwischen denen das Abdeck- wie Dachlaminat oder -schichtsystem verläuft. Insbesondere soll unterbunden werden, dass Weichmacher in die abzudeckende Fläche und/oder Bitumen aus der Fläche bzw. aus einer das Abdeck- wie Dachlaminat bzw. -schichtsystem mit der Fläche verbindenden Haftschicht in die Abdeck- wie Dachbahn migriert.

### Zur Lösung der Aufgabe wird insbesondere vorgeschlagen ein

Abdecklaminat oder -schichtsystem zur Verwendung des Abdeckens oder Abdichtens eines Elements, wie eines Bauwerks, insbesondere eines Dachs, umfassend zumindest
- eine elementseitig verlaufende erste Schicht in Form einer Sperrschicht oder -folie, die gegenüber zumindest einem Material aus der Gruppe Bitumen, expandiertes Polystyrol, Weichmacher migrationshemmend ist, und
- eine elementfernliegend verlaufende zweite Schicht in Form eines ersten Vlieses, das zum Verbinden mit einer Bauwerksabdeckung vorgesehen ist,
wobei entweder die erste Schicht mittels eines reaktiven weichmacherbeständigen Klebstoffs oder bei Ausbildung der ersten Schicht als thermoplastische Schmelzklebefolie mittels dieser mit der zweiten Schicht verbunden ist.

In Weiterbildung ist vorgesehen, dass entlang element- wie dachseitig verlaufender Seite der ersten Schicht und mit dieser über einen Klebstoff verbunden eine dritte Schicht in Form eines zweiten Vlieses verläuft.

Dabei sollte der Klebstoff ein reaktiver weichmacherbeständiger Schmelzklebstoff sein (Hotmelt). Schmelzklebstoffe sind dem Fachmann allgemein bekannt und sind beispielsweise beschrieben in CD Römpp Chemie Lexikon, Version 1.0, Georg Thieme Verlag, Stuttgart, 1995.

Weiterhin kann der Klebstoff auch ein weichmacherbeständiger Kontaktklebstoff sein. Als Bindemittel für diesen Klebstofftyp werden Polymere (vor allem Polychloropren und Polyurethane) verwendet, die nach Verdunsten des Lösemittels nach einer gewissen Zeit vom amorphen in den kristallinen Zustand übergehen, wobei sich ihre Festigkeit stark erhöht.

Weiterhin kann der Klebstoff auch ein strahlenhärtender Klebstoff sein. Durch radikalische Polymerisation härten diese 1K-Klebstoffe zu festen Polymeren aus, wobei die Bildung der Startradikale durch Bestrahlung mit UV-Licht (oder anderen Strahlenquellen wie Elektronen) hervorgerufen wird. Die Wellenlängen des durch den Strahler emittierten UV-Lichtes müssen dabei mit den Absorptionswellenlängen des eingesetzten Initiators übereinstimmen.

Weitere vorteilhafte Klebstoffe können auf Acrylatverbindungen, Polyurethanpolymere, Silan-terminierte Polymere oder Polyolefine basieren.

Bevorzugte Acrylatverbindungen sind insbesondere Acrylatverbindungen auf Basis von Acrylmonomeren, insbesondere Acryl- und Methacrylsäureester.

"Polyurethanpolymere" umfasst sämtlich Polymere, welche nach dem Diisocyanat-Verfahren hergestellt werden. Dies schließt auch solche Polymere ein, die nahezu oder gänzlich frei von Urethangruppen sind. Beispielhaft seien Polyether-Polyurethane, Polyester-Polyurethane, Polyether-Polyharnstoffe, Polyharnstoffe, Polyester-Polyharnstoffe, Polyisocyanurate und Polycarbodiimide als Polyurethanpolymere genannt.

Weiterhin können die Klebstoffe auch auf Thermoplasten und/oder thermoplastischen Elastomeren basieren, insbesondere ausgewählt aus der Gruppe bestehend aus Polyethylen (PE), Polyethylen mit niedriger Dichte (LDPE), Ethylen/Vinylacetat-Copolymer (EVA), Polybuten (PB); thermoplastische Elastomere auf Olefinbasis (TPE-O, TPO) wie Ethylen-Propylen-Dien/Polypropylen-Copolymere; vernetzte thermoplastische Elastomere auf Olefinbasis (TPE-V, TPV); thermoplastische Polyurethane (TPE-U, TPU), wie TPU mit aromatischen Hartsegmenten und Polyester Weichsegmenten (TPU-ARES), Polyether Weichsegmente (TPU-ARET), Polyester- und Polyether-Weichsegmenten (TPU-AREE) oder Polycarbonat-Weichsegmenten (TPU-ARCE); thermoplastische Copolyester (TPE-E, TPC), wie TPC mit Polyester-Weichsegmenten (TPC-ES), Polyether Weichsegmenten (TPC-EE); Styrol Block-Copolymere (TPE-S, TPS), wie Styrol/Butadien-Block-Copolymer (TPS-SBS), Styrol/Isopren-Block-Copolymer (TPS-SIS), Styrol/Ethylen-Butylen/Styrol-Block-Copolymere (TPS-SEBS), Styrol/Ethylen-Propylen/Styrol-Block-Copolymere (TPS-SEPS); und thermoplastische Copolyamide (TPE-A, TPA).

Vorteilhaft für den Klebstoff ist ein Schmelzpunkt (bestimmt nach der Ring & Kugel-Methode) von 40 - 200 °C, insbesondere 70 - 150 °C, bevorzugt 100 - 120 °C. Dies ist insbesondere für die Herstellung von wasserdichten Membranen und der verwendeten Sperrschicht bzw. -folie vorteilhaft, die bei hohen Herstellungstemperaturen in Mitleidenschaft gezogen werden.

Gegenstand der Erfindung ist des Weiteren ein Abdecklaminat oder -schichtsystem, das zum Abdecken bzw. Abdichten eines Elements, wie Bauwerks, insbesondere Dachs, verwendet wird und sich auszeichnet durch eine elementseitig verlaufende erste Schicht in Form einer gegenüber Bitumen und/oder expandiertes Polystyrol (EPS) und/oder Weichmacher migrationshemmenden Sperrschicht oder -folie sowie eine elementfernliegend verlaufende zweite Schicht in Form eines ersten Vlieses, wobei die migrationshemmende Sperrschicht oder -folie die Eigenschaft besitzt, schmelzbar zu sein und gute Haftungseigenschaften zu besitzen.

Die migrationshemmende Sperrschicht weist die Eigenschaften auf, dass diese offenporig gegenüber Wasserdampf und teilweise Sauerstoff ist, jedoch die Migration von flüchtigen Bestandteilen von Weichmachern sowie Bitumen bzw. Bitumenöl bzw. Bitumenbestandteilen hemmt.

In Weiterbildung ist vorgesehen, dass entlang element- bzw. dachseitig verlaufender Seite der ersten Schicht eine dritte Schicht in Form eines zweiten Vlieses verläuft.

Dabei sollte die schmelzbare, migrationshemmende Sperrschicht bzw. -folie, oder auch thermoplastische Schmelzklebefolien genannt, auf Thermoplasten und/oder thermoplastischen Elastomeren basieren, bevorzugt ausgewählt aus einer der Gruppen bestehend aus
- Polyethylen (PE), Polyethylen mit niedriger Dichte (LDPE), Ethylen/Vinylacetat-Copolymer (EVA), Polybuten (PB);
- thermoplastische Elastomere auf Olefinbasis (TPE-O, TPO) wie Ethylen-Propylen-Dien/Polypropylen-Copolymere;
- vernetzte thermoplastische Elastomere auf Olefinbasis (TPE-V, TPV);
- thermoplastische Polyurethane (TPE-U, TPU), wie TPU mit aromatischen Hartsegmenten und Polyester Weichsegmenten (TPU-ARES), Polyether Weichsegmente (TPU-ARET), Polyester- und Polyether-Weichsegmenten (TPU-AREE) oder Polycarbonat-Weichsegmenten (TPU-ARCE);
- thermoplastische Copolyester (TPE-E, TPC), wie TPC mit Polyester-Weichsegmenten (TPC-ES), Polyether Weichsegmenten (TPC-EE);
- Styrol Block-Copolymere (TPE-S, TPS), wie Styrol/Butadien-Block-Copolymer (TPS-SBS), Styrol/Isopren-Block-Copolymer (TPS-SIS), Styrol/Ethylen-Butylen/Styrol-Block-Copolymere (TPS-SEBS), Styrol/Ethylen-Propylen/Styrol-Block-Copolymere (TPS-SEPS);
- thermoplastische Copolyamide (TPE-A, TPA), insbesondere thermoplastische Copolyamide (TPE-A, TPA) und thermoplastische Polyurethane (TPE-U, TPU). Vorteilhaft für eine Schmelzklebefolie ist ein Schmelzpunkt (bestimmt nach der Ring & Kugel-Methode) von 40 - 200 °C, insbesondere 70 - 150 °C, bevorzugt 100 - 140 °C. Dies ist insbesondere für die Herstellung von wasserdichten Membranen und der verwendeten Sperrschicht bzw. -folie vorteilhaft, die bei hohen Herstellungstemperaturen in Mitleidenschaft gezogen werden. Außerdem stellen diese Temperaturen die optimalen Bedingungen für einen Verbund der Schmelzklebefolie mit dem Vlies dar.

Dabei kann die Sperrschicht bzw. -folie, oder auch thermoplastische Schmelzklebefolie genannt, eine Dicke ds mit 5 µm ≤ ds ≤ 100 µm, insbesondere 15 µm ≤ ds ≤ 50 µm aufweisen.

Das erfindungsgemäße Laminat bzw. Schichtsystem wird z.B. auf einer Fläche eines Gebäudes, eines Platz, eines Daches verlegt. Die Seite, die der abzudeckenden Fläche naheliegt bzw. dieser zugewandt ist, wird als elementseitig bezeichnet.

Das erste und/oder zweite Vlies zeichnet sich insbesondere dadurch aus, dass dieses zumindest aus einem Material aus der Gruppe Cellulose-Baumwollfasern, Proteinfasern oder synthetischen Fasern besteht. Als synthetische Fasern sind vor allem Fasern aus Polyester oder aus einem Homo- oder Copolymeren von Ethylen und/oder Propylen, aus einem Polyamid oder aus Viskose zu nennen, wobei PET (Polyethylenterephthalat) und PUR (Polyurethan) hervorzuheben ist. Die Fasern können hierbei Kurzfasern oder Langfasern, gesponnene, gewebte oder ungewebte Fasern oder Filamente sein. Weiterhin können die Fasern gerichtet oder gestreckt sein. Ferner kann es vorteilhaft sein, unterschiedliche Fasern sowohl in Geometrie als auch Zusammensetzungen miteinander zu verwenden.

Das aus Fasern aufgebaute Vlies kann mit verschiedenen, dem Fachmann bekannten Verfahren hergestellt werden. So werden in der Regel zunächst die Matrixfasern (aus einem festen Material) erzeugt, auf die anschließend eine Schicht aus dem thermoplastischen Copolyester aufgebracht wird. Solche Fasern sind dem Fachmann auch unter "Biko" (entspricht Bi-Komponenten)-Fasern geläufig.

Das Vlies umfasst Zwischenräume, die durch geeignete Herstellungsverfahren erzeugt werden können. Vorzugsweise sind Zwischenräume zumindest teilweise offen und erlauben das Eindringen von Haftmittel.

Des Weiteren sind als Vliesersatz auch Schäume oder geschäumte Materialien denkbar basierend auf dem Dachbahnengrundmaterial wie z.B. PVC-P, TPO mit Polyproylen/EPDM (Ethylen-Propylen-Dien Kautschuk) oder Polethylen/EPDM, TPV; ebenfalls sind Schäume basierend auf Polyolefinen wie z.B. Polethylen und/oder Polypropylen; basierend auf Polyestern wie z.B. Polyethylenterephthalat; basierend auf EVA; basierend auf PA möglich.

Weiterhin kann das Vlies auch mit Superabsorberpolymeren oder quellfähigen Polymeren wie z.B. natürliche, quellfähige Polymere aus der Gruppe Gummiarabikum, Traganth und Karaya Gummi, Casein, Eiweiß; halbsynthetische, quellfähige Polymer wie z.B. aus der Gruppe Carboxymethylcellulose, Methylcellulose und andere Celluloseether, Ligninderivate, modifizierte Stärke; synthetische, quellfähige Polymere der Gruppen bestehend aus Polymeren der Acrylsäuren/Acrylsalze wie Polyacrylsäure, Polyacrylsäurecopolymere, Polyacrylamide; Bentonite, Polyurethane, Polyetherblockamide, Polyacrylsäureester, Ionomere und/oder Polyamide mit entsprechender Wasseraufnahme; Polyethylenoxid, Polyvinylpyrrolidone, Polyethylenimin, vernetzten Natriumpolyacrylat, Thermoplast-Elastomer-Composite versetzt sein.

Insbesondere ist vorgesehen, dass das Vlies eine Dicke dᵥ mit 0,1 mm ≤ dᵥ ≤ 5 mm, insbesondere 0,15 mm ≤ dᵥ ≤ 0,3 mm, und/oder eine Grammatur G mit 5 g/m² ≤ G ≤ 1000 g/m², insbesondere 20 g/m² ≤ G ≤ 50 g/m², aufweist.

Hervorzuheben ist des Weiteren, dass der reaktive weichmacherbeständige Schmelzklebstoff auf PUR (Polyurethan) basierend und insbesondere ein 1-Komponenten-Schmelzklebstoff oder Mehr-Komponenten-Schmelzklebstoff, insbesondere 2-Komponenenten-Schmelzklebstoff sein kann, oder der weichmacherbeständige Schmelzklebstoff ein polyolefinischer thermoplastischer Klebstoff bzw. Klebstoffschmelze sein kann, insbesondere auf Basis von Polyethylen (PE).

Die Sperrschicht oder -folie zeichnet sich insbesondere dadurch aus, dass die Sperrschicht bzw. -folie aus zumindest einem Material aus der Gruppe PA (Polyamid), PET (Polyethylenterephthalat), EVOH (Copolymer aus Ethylen und Vinylalkohol), PP (Polypropylen), PE (Polyethylen), PVDC (Polyvinylidenchlorid), PVDF (Polyvinylidenfluorid), PAN (Polyacrylnitril), PEN (Polyethylennaphthalat), PC (Polycarbonat) besteht oder zumindest ein solches enthält, wobei insbesondere die Sperrschicht ein Schmelzkleber auf der Basis von Polyamid (PA) ist.

Besonders bevorzugt besteht die migrationshemmende Sperrschicht aus einem Material aus der Gruppe Polyamid, Copolyamid, thermoplastisches Polyamid (TPA), Polyehtylenterephthalat (PET) oder enthält zumindest ein Material aus dieser Gruppe.

Unabhängig hiervon kann die Sperrschicht bzw. -folie eine Dicke ds mit 5 µm ≤ ds ≤ 100 µm, insbesondere 15 µm ≤ ds ≤ 50 µm aufweisen und/oder ein- oder mehrlagig ausgebildet sein.

Weiterhin kann die äußerste Schicht bzw. Schichten der Sperrschicht bzw. -folie mittels dem Fachmann bekannter Hilfsverfahren wie z.B. Beflammen, Laser-Vorbehandlung, Ionenätzen/Sputtern oder Plasmavorbehandlung (Niederdruckplasma/ Atmosphärendruckplasma/Corona-Verfahren) aktiviert bzw. vorbehandelt werden, um eine bessere Haftung des Klebstoffs zu ermöglichen.

Ein entsprechendes Abdecklaminat bzw. -schichtsystem - nachstehend vereinfacht auch Dachbahnlaminat genannt - kann über eine selbstklebende Haftschicht basierend auf Bitumen, Butyl, SPS, SBR (Styrol-Butadien-Rubber), Acrylatverbindungen, Silan-terminierte Polymere oder Polyolefine oder andere geeignete gute Hafteigenschaften aufweisenden Klebstoff auf eine abzudeckende Fläche, wie Dach, befestigt werden.

Bevorzugte Acrylatverbindungen sind insbesondere Acrylatverbindungen auf Basis von Acrylmonomeren, insbesondere Acryl- und Methacrylsäureester.

Weiterhin können die Klebstoffe auch auf Thermoplasten und/oder thermoplastischen Elastomeren basieren, insbesondere ausgewählt aus der Gruppe bestehend aus Polyethylen (PE), Polyethylen mit niedriger Dichte (LDPE), Ethylen/Vinylacetat-Copolymer (EVA), Polybuten (PB); thermoplastische Elastomere auf Olefinbasis (TPE-O, TPO) wie Ethylen-Propylen-Dien/Polypropylen-Copolymere; vernetzte thermoplastische Elastomere auf Olefinbasis (TPE-V, TPV); thermoplastische Polyurethane (TPE-U, TPU) wie TPU mit aromatischen Hartsegmenten und Polyester Weichsegmenten (TPU-ARES), Polyether Weichsegmente (TPU-ARET), Polyester- und Polyether-Weichsegmenten (TPU-AREE) oder Polycarbonat-Weichsegmenten (TPU-ARCE); thermoplastische Copolyester (TPE-E, TPC) wie TPC mit Polyester-Weichsegmenten (TPC-ES), Polyether Weichsegmenten (TPC-EE); Styrol Block-Copolymere (TPE-S, TPS) wie Styrol/Butadien-Block-Copolymer (TPS-SBS), Styrol/Isopren-Block-Copolymer (TPS-SIS), Styrol/Ethylen-Butylen/Styrol-Block-Copolymere (TPS-SEB S), Styrol/Ethylen-Propylen/Styrol-Block-Copolymere (TPS-SEPS); und thermoplastische Copolyamide (TPE-A, TPA) oder Kombination dieser.

Weiterhin kann ein entsprechendes Abdecklaminat bzw. -schichtsystem über eine Schweißmasse, insbesondere basierend auf Polymerbitumen, auf eine abzudeckende Fläche wie Dach, Terrasse oder Parkdeck verschweißt werden.

Auf die außenliegende erste Schicht kann zum Beispiel eine Bitumenmembran, eine Isolation oder sonstige mögliche Bauwerksabdeckung befestigt werden. Insbesondere kann die erste Schicht von einer Dichtungsbahn aus zumindest einem Material aus der Gruppe PVC (Polyvinylchlorid), TPE (Thermoplastisches Elastomer), TPO (Thermoplastisches Elastomer auf Olefinbasis), EPDM (Ethylen-Propylen-Dien-Kautschuk), EVA (Ethylenvinylacetat), PP (Polypropylen), PE (Polyethylen), PA (Polyamid) abgedeckt werden.

Ein Verfahren zur Herstellung eines Abdeckbahnlaminats und/oder einer Abdeckbahn mit den zuvor beschriebenen Merkmalen zeichnet sich durch die Verfahrensschritte aus
- Beschichten der einander zugewandten Seiten der ersten und der zweiten Schicht und bei Verwendung der dritten Schicht zusätzliches Beschichten der einander zugewandten Seiten der zweiten und dritten Schicht mit dem reaktiven Klebstoff,
- Aufeinanderlegen der Schichten und Aushärten des Klebstoffs, wobei die erste Schicht mit einer Abdeck- wie Dachbahn verbunden wird und zum Verbinden der Abdeck- wie Dachbahn mit dem Abdeck- wie Dachbahnlaminat dieses zuvor zum Beispiel mittels IR-Strahlung erwärmt bzw. erhitzt wird.

Insbesondere ist vorgesehen, dass zum Verbinden der ersten Schicht mit der zweiten Schicht bzw. der dritten Schicht mit der ersten Schicht ein reaktiver weichmacherbeständiger Schmelzklebstoff verwendet wird, der aus einem 1-Komponenten oder einem Mehr-Komponenten reaktiven Schmelzkleber besteht.

Weitere vorteilhafte Klebstoffe können basieren auf Acrylatverbindungen, Polyurethanpolymere, Silan-terminierte Polymere oder Polyolefine.

Das erfindungsgemäße Abdecklaminat bzw. -schichtsystem ist für jede Art von Dach- und Dichtungs- bzw. Abdichtungsbahnen geeignet, wie zum Beispiel PVC, EVA, Bitumen, FPO, TPO, TPE, TPV, PIB. Das Laminat bzw. Schichtsystem ist als Sperre gegen Bitumen geeignet. Das Laminat bzw. Schichtsystem kann als Kaschierung für eine selbstklebende Dachbahn (Abdichtungsbahn) verwendet werden, wobei die Einheit aus Dachbahn und Laminat bzw. -schichtsystem dachseitig eine selbstklebende Haftschicht aufweist und somit ein problemloses Aufbringen und Fixieren auf einer abzudeckenden Fläche möglich ist. Das Laminat bzw. Schichtsystem kann als Kaschierung für eine verschweißbare Dachbahn (Abdichtungsbahn) verwendet werden, wobei die Einheit aus Dachbahn und Abdecklaminat bzw. -schichtsystem dachseitig eine Schweißmasse aufweist und somit ein problemloses Verschweißen und Fixieren auf einer abzudeckenden Fläche möglich ist.

Es besteht die Möglichkeit, dass die element- bzw. dachfernliegende Seite, also die Seite, auf der zum Beispiel eine Dachbahn aufgebracht wird, mittels IR-Strahler oder sonstigen Wärmequellen erhitzt wird, so dass beim Auflegen der entsprechenden Dachbahnen die noch heiße Dachbahnmasse in die zweite Schicht (Vlies) fließt mit der Folge, dass aufgrund der hierdurch auftretenden Verkrallung eine hohe Festigkeit erzielbar ist.

Bezüglich des reaktiven weichmacherbeständigen Klebstoffs ist anzumerken, dass dieser dadurch charakterisiert ist, dass eine Wechselwirkung mit in den aufzubringenden Dachbahnen verwendeten Weichmachern ausgeschlossen wird. Reaktion mit Bitumen soll nicht erfolgen. Auch Reaktionen mit Wasser bzw. Feuchtigkeit sollen vermieden werden.

Das erfindungsgemäße Abdecklaminat bzw. -schichtsystem führt zu einer deutlichen Verbesserung des Alterungsverhaltens einer aufzubringenden Dachbahn, da kein direkter Kontakt zwischen z.B. einer Dachbahn und dem Material der Fläche erfolgt, auf der das Abdecklaminat bzw. -schichtsystem aufgebracht ist. Eine Wechselwirkung wird ausgeschlossen. Auch wird eine Weichmacherwanderung von der Abdichtungsbahn bzw. Dachbahn zu der abzudeckenden Fläche unterbunden. Sollte die Sperrschicht bzw. -folie ihrer Funktion aufgrund Alterungsabbaus nicht mehr nachkommen können, so bildet das Vlies eine weitere zusätzliche Sicherheitsschicht.

Das Laminat bzw. Schichtsystem wird über eine selbstklebende Haftschicht mit der abzudeckenden Fläche verbunden, wobei die Haftschicht zumindest aus einem Material aus der Gruppe Bitumen, Butyl, Elastomer, SBR, Heißklebstoff oder Kombinationen dieser oder einer Schweißmasse basierend auf Polymerbitumen besteht.

Insbesondere durch die Verwendung des reaktiven Klebstoffs zwischen der ersten und zweiten Schicht bzw. ersten und dritten Schicht ist eine Haftung gegeben, die eine Trennung der Schichten des Laminats ausschließt, auch unter verschiedensten Temperaturen, welche im Außenbereich zu erwarten sind: von -40 °C bis +100 °C, insbesondere von -20 °C bis +80 °C.

Um eine gute Haftvermittlung zwischen den Dachbahnlaminat bzw. -schichtsystem und der mit diesem zu verbindenden Dachbahn zu erzielen, können die einander zugewandten Flächen zum Beispiel mittels Corona, Flammvorbehandlung und sonstigen bekannten Vorbehandlungsmethoden vorbehandelt werden.

Zur Herstellung des Abdecklaminats bzw. -schichtsystems wird auf die zweite Schicht der reaktive Klebstoff aufgebracht, um sodann die erste Schicht, also die Sperrschicht oder -folie aufzutragen. Sofern eine dritte Schicht, also ein weiteres Vlies vorhanden ist, wird dieses gleichfalls zunächst mit dem Klebstoff beschichtet, um sodann auf die Sperrschicht bzw. -folie aufgebracht zu werden.

Ein verwendeter reaktiver Schmelzklebstoff bedarf zum Aushärten Zeit, ohne dass ein zusätzlicher Energieeintrag erfolgen muss wie zum Beispiel Druck oder Wärme.

Zu dem auf PUR (Polyurethan) basierenden reaktiven weichmacherbeständigen Klebstoff ist anzumerken, dass 1-Komponenten und Mehr-Komponenten, insbesondere 2-Komponentensysteme verwendet werden können, die durch Polyaddition aushärten.

1-komponentige PUR-Klebstoffe erhärten unter Zugabe von Luftfeuchtigkeit und/oder Härte aus.

Es besteht die Möglichkeit, bei der Aushärtung mehrere Mechanismen zu verwenden, so dass eine erste Handlingsfestigkeit durch die Luftfeuchtigkeitshärtung, die Endfestigkeit der Verklebung aber erst mit der Wärmeeinsaugung eintritt.

Klebstoffe auf Polyurethanbasis können folgende Grundbausteine enthalten
- Diphenylmethan-4,4'-diisocyanat (MDI),
- Isophorondiisocyanat (IPDI),
- Toluylendiisocyanat (TDI),
- Hexamethylendiisocyanat (HDI)

Vorzugsweise härtet das Laminat ohne zusätzlichen Energieeintrag wie zum Beispiel durch Wärme oder Druck aus, also ausschließlich über die Zeit, wobei ein Zeitfenster von zwei bis drei Tagen ohne Weiteres nötig ist. Selbstverständlich wird die Erfindung nicht verlassen, wenn zusätzlich Druck und/oder Wärme oder ein sonstiger Energieeintrag erfolgt, um das Aushärten zu beschleunigen.

Weiterhin kann der Klebstoff auch ein weichmacherbeständiger Kontaktklebstoff sein, der nach Verdunsten des Lösemittels nach einer gewissen Zeit vom amorphen in den kristallinen Zustand übergeht und sich dabei die Festigkeit stark erhöht.

Weiterhin kann der Klebstoff auch ein strahlenhärtender Klebstoff sein, der durch Bestrahlung mit UV-Licht (oder anderen Strahlenquellen wie Elektronen) aushärtet.

Die Erfindung bezieht sich auch auf ein Verfahren zur Herstellung einer Abdeckung und/oder Abdichtung eines Bauwerkes oder eines Teils von diesem, umfassend eine Abdeck- bzw. Abdicht- wie Dachbahn, insbesondere bestehend aus oder enthaltend Weich-PVC, sowie eine bauwerkseitig verlaufende Sperrschicht, umfassend den Verfahrensschritt Auftragen eines die Sperrschicht bildenden Schmelzklebers auf Basis von Polyamid auf bauwerksseitig verlaufender Seite eines Vlieses, das von der Abdeckbahn abgedeckt wird oder ist.

Es besteht die Möglichkeit, dass der Schmelzkleber mittels Rakel, Walzenauftrag und/oder Extrusion oder als bereits vorgefertigte Hotmelt-Folie aufgetragen wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen:
Es zeigen:
- Fig. 1: eine erste Ausfuhrungsform eines Dachlaminats bzw. -schichtsystems,
- Fig. 2: eine zweite Ausführungsform eines Dachlaminats bzw. -schichtsystems,
- Fig. 3: eine dritte Ausführungsform eines Dachlaminats bzw. -schichtsystems und
- Fig. 4: eine vierte Ausführungsform eines Dachlaminats bzw. -schichtsystems.

Den Figuren, in denen gleiche Elemente mit gleichen Bezugszeichen versehen sind, sind Abdecklaminate bzw. -schichtsysteme zu entnehmen, die zwischen einer abzudeckenden Fläche und einer abdichtenden Abdeck- bzw. Abdicht- oder Außenbahn - nachstehend Dachbahn genannt - verläuft, um eine Migration von Materialien von der Dachbahn in die Fläche und umgekehrt insoweit zu vermeiden, dass das Alterungsverhalten der Dachbahn im Vergleich zu vorbekannten Dachschichtsystemen verbessert und das Dachschichtsystem durch Materialien, die zu Migration neigen, nicht negativ beeinflusst wird.

Es soll das Migrieren von Bitumen, Fluxölen und/oder Weichmachern bzw. deren flüchtigen Bestandteile und/oder expandiertes Polystyrol verhindert bzw. gehemmt werden. Die Möglichkeit ein Diffundieren von Wasserdampf bzw. Sauerstoff soll gegeben sein.

Da Hauptanwendungsfall im Wesentlichen die Bauwerksabdichtung ist, insbesondere die Abdeckung von Dächern, wird nachstehend von Dachbahnlaminat bzw. -schichtsystem gesprochen, gleichwenn das Laminat bzw. Schichtsystem auch für andere Abdeckungen geeignet ist. Insoweit ist das Wort "Dach" nicht einschränkend zu verstehen.

Aus Gründen der Einfachheit wird jedoch häufig das Wort "Dach" benutzt.

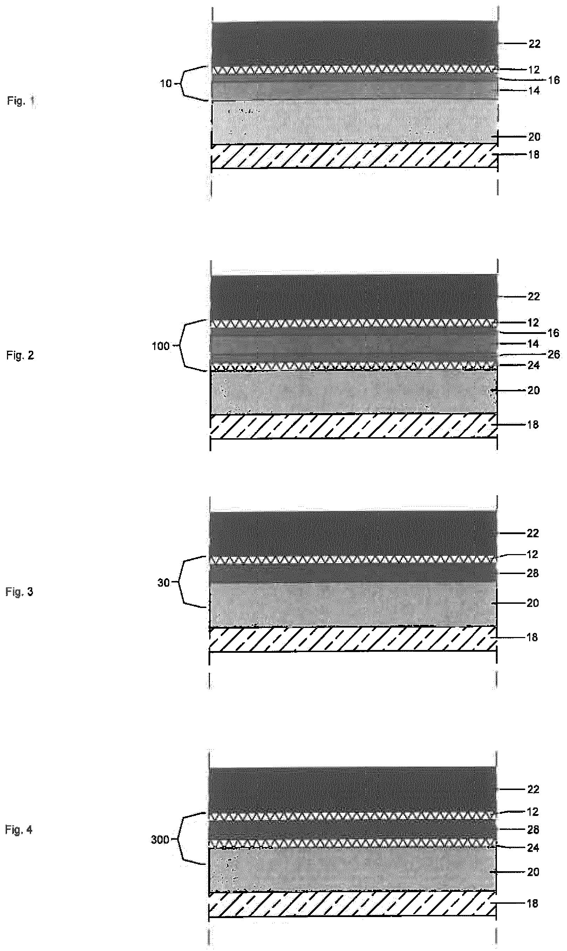

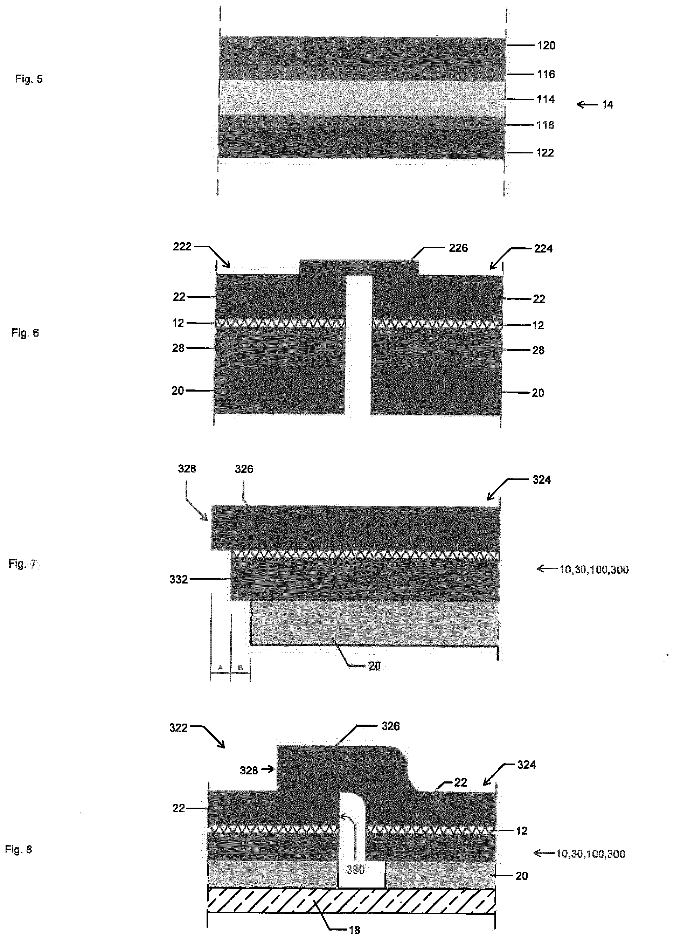

In Fig. 1 ist ein so genanntes Bilaminat 10 dargestellt, das ein als zweite Schicht bezeichnetes Vlies 12 und eine als erste Schicht 14 bezeichnete Sperrfolie umfasst, die über einen reaktiven weichmacherbeständigen Klebstoff verbunden sind, der zeichnerisch als Schicht 16 dargestellt ist. Die erste Schicht 14 kann auch ein Schichtsystem sein, wie dies anhand der Fig. 5 erläutert wird.

Die zweite Schicht 12 - nachstehend auch als Vlies 12 bezeichnet - basiert auf Polyester oder auf einem Homo- oder Copolymeren von Ethylen und/oder Propylen, auf einem Polyamid oder auf Viskose, auf PET (Polyethylentervephthalat) oder auf PUR (Polyurethan), insbesondere auf PET (Polyethylenterephthalat. Auch die Verwendung von Schäumen kommt in Frage.

Die Dicke der zweiten Schicht 12 liegt zwischen 0,1 mm und 5 mm, wobei bevorzugterweise eine Dicke zwischen 0,15 mm und 0,3 mm anzugeben ist. Mögliche Grammaturen liegen zwischen 5g/m² und 1000g/m², wobei ein m²⁻Gewicht zwischen 20g/m² und 50g/m² zu bevorzugen ist.

Die erste Schicht 14 - nachstehend auch als Sperrfolie 14 bezeichnet - basiert insbesondere auf PA (Polyamid), PET (Polyethylenterephthalat) Copolyamid, thermoplastisches Polyamid (TPE-A), EVOH (Copolymer aus Ethylen und Vinylalkohol), PP (Polypropylen), PE (Polyethylen), PVDC (Polyvinylidenchlorid), PVDF (Polyvinylidenfluorid), PAN (Polyacrylnitril), PEN (Polyethylennaphthalat), PC (Polycarbonat) und kann ein- oder mehrlagig ausgebildet sein. Kombinationen der erwähnten Materialien kommen gleichfalls in Frage.

Besonders bevorzugt besteht oder enthält die Sperrfolie 14 aus zumindest einem Material der Gruppe Polyamid, Copolyamid, thermoplastisches Polyamid, Polyethylennaphthalat.

Bevorzugte Dicken der ersten Schicht 14 liegen zwischen 5 µm und 100 µm, insbesondere 15µm und 50µm.

Der die Schicht 16 bildende reaktive weichmacherbeständige Klebstoff kann insbesondere ein 1-Komponenten oder ein 2-Komponentensystem basierender Schmelzklebstoff sein und härtet durch Polyaddition aus. Dabei härten 1-Komponenten-PUR-Klebstoffe unter Zugabe von Luftfeuchtigkeit und/oder Wärme aus. Auch besteht die Möglichkeit, diese Mechanismen zu verbinden, so dass eine erste Handlingsfestigkeit durch Luftfeuchtigkeitserhärtung und die Endfestigkeit unter Wärmeeinwirkung eintritt.

Damit das aus den Schichten 12, 14, 16 bestehende Laminat 10 auf einer Begrenzungsfläche wie Dach 18 verlegt werden kann, verläuft entlang der Außenseite der Sperrfolie 14 eine selbstklebende Haftschicht 20, die zum Beispiel auf Bitumen, Butyl, SBR (Styrol-Butadien-Elastomer), Elastomer oder Kombinationen dieser oder auf einer Schweißmasse basierend auf Polymerbitumen beruhen kann. Sonstige geeignete Klebeschichten kommen gleichfalls in Frage.

Das Dach 18 kann außenseitig eine Bitumenmembran, eine Isolation, insbesondere EPS, oder sonstige Dachaufbauten aus dem Dachbereich aufweisen. Dies wird unter dem Begriff Dach subsummiert.

Die Außenseite des Bilaminats 10 und somit des Vlieses 12 wird von einer Dachbahn 22 abgedeckt, die insbesondere auf Materialien wie PVC (Polyvinylchlorid), TPE (Thermoplastisches Elastomer), TPO (Thermoplastischer Elastomer auf Olefinbasis), TPV (Thermoplastisches Vulkanisat), EPDM (Ethylen-Propylen-Dien-Kautschuk), EVA (Ethylenvinylacetat) basiert, wobei als Dachbahn 22 all diejenigen in Frage kommen, die in der DIN SPEC2000-21 klassiert sind.

Als Dachbahn 22 kommen auch Folientypen wie PP (Polypropylen), PE (Polyethylen), PA (Polyamid), PIB (Polyisobutylen), PET (Polyethylenterephthalat) in Frage.

Zur Herstellung des Bilaminats 10 wird zunächst das Vlies 12 mit dem reaktiven weichmacherbeständigen Schmelzklebstoff beschichtet. Dies kann durch Auftragen mittels Walzen erfolgen. Auf die durch den Schmelzklebstoff gebildete Schicht 16 wird sodann die Sperrfolie 14 aufgetragen. Zum Aushärten des Schmelzklebstoffs und somit zur Herstellung der Verbindung zwischen dem Vlies 12 und der Sperrfolie 14 ist ein zusätzlicher Energieeintrag grundsätzlich nicht erforderlich. Vielmehr kann ein Aushärten über einen Zeitlauf von zum Beispiel zwei bis drei Tagen erfolgen. Selbstverständlich kann jedoch ein gezielter Energieeintrag erfolgen, um die Zeitdauer zu verkürzen.

Ein entsprechendes Laminat 10 wird mit dem Dach 18 über die selbstklebende Haftschicht 20 verbunden. Auf das Vlies 12 kann sodann die Dachbahn 12 aufgebracht werden. Hierzu ist insbesondere vorgesehen, dass das Bilaminat 10 zunächst erwärmt wird - zum Beispiel mittels IR-Strahler -, so dass von der zuvor erwärmten Dachbahn 22 Dachbahnmasse in das Vlies 12 fließen kann, so dass sich durch Verkrallung zwischen Dachbahn 22 und Vlies 12 eine hohe Festigkeit ergibt.

Das der Fig. 2 zu entnehmende Laminat 100 ist ein Trilaminat und weist neben der ersten Schicht 14 der zweiten Schicht 12 und dem zwischen diesen verlaufenden als Schicht 16 bezeichneten reaktiven Schmelzklebstoff eine dritte Schicht 24 auf, die gegenüberliegend zu der zweiten Schicht 12 verläuft und ebenfalls ein Vlies ist. Die dritte Schicht 24 ist gleichfalls über einen als Schicht 26 dargestellten reaktiven weichmacherbeständigen Schmelzklebstoff mit der Sperrfolie 14 verbunden, so dass auf zuvor erfolgte Ausführungen verwiesen wird. Das so aufgebaute Trilaminat 100 wird entsprechend dem Bilaminat 20 einerseits mit dem Dach 18 über die selbstklebende Haftschicht 20 und andererseits mit der Dachbahn 22 in zuvor beschriebener Weise verbunden.

Den Fig. 3 und 4 sind weitere Ausführungsformen eines Laminats bzw. Schichtsystems zu entnehmen, mittels dessen eine Migration von Materialien von der einen Seite zur anderen und umgekehrt vermieden bzw. gehemmt bzw. reduziert werden soll. Die den Fig. 3 und 4 zu entnehmenden Laminate 30, 300 unterscheiden sich von denen der Fig. 1 und 2 dahingehend, dass das Vlies 12 (Fig. 3) bzw. die Vliese 12, 24 (Fig. 4) nicht mit einem reaktiven weichmacherbeständigen Klebstoff verbunden sind, sondern dass eine mit dem Bezugszeichen 28 bezeichnete und mit dem Vlies 12 bzw. den Vliesen 12, 24 verbundene Sperrfolie 28 gleichzeitig adhäsive Eigenschaften aufweist, also die adhäsive Komponente gleichzeitig bildet. Die Sperrfolie 28 ist hierzu insbesondere als thermoplastische Schmelzklebefolie ausgebildet. Die Sperrfolie 28 wird unmittelbar mit dem bzw. den Vliesen 12, 24 und nicht über eine Klebstoffschicht mit diesen verbunden.

Dabei sollte die schmelzbare, migrationshemmende Sperrfolie 28 ― auch thermoplastische Schmelzklebefolien genannt ― auf Thermoplasten und/oder thermoplastischen Elastomeren basieren, bevorzugt ausgewählt aus einer der Gruppen bestehend aus
- Polyethylen (PE), Polyethylen mit niedriger Dichte (LDPE), Ethylen/Vinylacetat-Copolymer (EVA), Polybuten (PB)
- thermoplastische Elastomere auf Olefinbasis (TPE-O, TPO) wie Ethylen-Propylen-Dien/Polypropylen-Copolymere
- vernetzte thermoplastische Elastomere auf Olefinbasis (TPE-V, TPV)
- thermoplastische Polyurethane (TPE-U, TPU) wie TPU mit aromatischen Hartsegmenten und Polyester Weichsegmenten (TPU-ARES), Polyether Weichsegmente (TPU-ARET), Polyester- und Polyether-Weichsegmenten (TPU-AREE) oder Polycarbonat-Weichsegmenten (TPU-ARCE)
- thermoplastische Copolyester (TPE-E, TPC) wie TPC mit Polyester-Weichsegmenten (TPC-ES), Polyether Weichsegmenten (TPC-EE)
- Styrol Block-Copolymere (TPE-S, TPS) wie Styrol/Butadien-Block-Copolymer (TPS-SBS), Styrol/Isopren-Block-Copolymer (TPS-SIS), Styrol/Ethylen-Butylen/Styrol-Block-Copolymere (TPS-SEBS), Styrol/Ethylen-Propylen/Styrol-Block-Copolymere (TPS-SEPS)
- thermoplastische Copolyamide (TPE-A, TPA), insbesondere thermoplastische Copolyamide (TPE-A, TPA) und thermoplastische Polyurethane (TPE-U, TPU).

Dabei kann die Sperrschicht bzw. -folie 28 eine Dicke ds mit 5 µm ≤ ds ≤ 100 µm, insbesondere 10 µm ≤ ds ≤ 50 µm aufweisen.

Zur Herstellung des Bilaminats 30 wird zunächst das Vlies 12 als auch die thermoplastische Sperrfolie 28 erhitzt, z.B. mittels IR-Strahlern oder beheizten Walzen. In einem weiteren Schritt werden das Vlies 12 und die Sperrfolie 28 unter Druck verpresst und abgekühlt. Hierzu kann zum Beispiel ein Glättgestell mit gekühlten Walzen genutzt werden. Bereits bei Temperaturen knapp unterhalb des Schmelzpunktes der Sperrfolie 28, spätestens jedoch bei Erreichen der Raumtemperatur, hat sich Verbund verfestigt und kann aufgerollt und verpackt werden.

Bei der Herstellung des Trilaminats 300 werden lediglich das Vlies 24 und die zugewandte Seite der Sperrfolie 28 erhitzt und demselben Verfahren, wie bereits beschrieben, unterzogen.

Die Erfindung zeichnet sich daher auch durch ein Verfahren zur Herstellung eines Abdecklaminats bzw. einer Dachabdeckung mit den Verfahrensschritten aus:
- Erhitzen der dem Vlies 12 zugewandten Seite der Sperrfolie 28 (Fig. 3) und bei Verwendung eines weiteren Vlieses 24 zusätzliches Erwärmen der dem Vlies 24 zugewandten Seite der Sperrfolie 28 (Fig. 4),
- Aufeinanderlegen der Schichten (Vliese 12, 24, Sperrfolie 28) und durch Druck Verbinden der einzelnen Schichten,
wobei sodann das Vlies 12 mit einer Dachbahn 22 verbunden wird, indem zumindest das Laminat 30, 300 mittels z.B. IR Strahlern oder beheizten Walzen erhitzt wird und sodann die Dachbahn 22 aufgelegt wird.

Um die Verarbeitung während der Produktion sowohl des Bilaminats 30 als auch des Trilaminats 300 zu erleichtern, kann in verschiedenen Fällen eine Trägerfolie verwendet werden, z.B. basierend auf PE (Polyethylen) und/oder PP (Polypropylen), welche zum Schluss oder nach dem jeweiligen Herstellungsschritt abgezogen werden kann.

Das Bilaminat 10 und 30 als auch das Trilaminat 100 und 300 kann auch als Kaschierung für eine selbstklebende Dachbahn verwendet werden, so dass eine Einheit Dachbahn 22 Bilaminat 10 bzw. 30 bzw. Trilaminat 100 bzw. 300 mit der außenseitig verlaufenden selbstklebenden Haftschicht 20 zur Verfügung steht, die eingesetzt werden kann.

Die Erfindung zeichnet sich insbesondere jedoch auch dadurch aus, dass als Klebstoff, über die das Vlies 12 bzw. die Vliese 12, 24 mit der Sperrschicht 14 verbunden sind, anstelle eines auf PUR bestehenden Schmelzklebstoffs ein polyolefinischer thermoplastischer Klebstoff bzw. eine entsprechende Klebstoffschmelze verwendet wird, wobei diese insbesondere auf Polyethylen basiert. Vorteil der Verwendung eines entsprechenden Klebstoffs besteht darin, dass eine gute Hydrolysebeständigkeit gegeben ist.

Die Erfindung zeichnet sich jedoch auch dadurch aus, dass als Sperr- oder Barriereschicht eine Schicht auf der Basis von Polyamid verwendet wird, wobei eine entsprechende Polyamidschmelze unmittelbar auf das Vlies 12 bzw. 24 aufgetragen werden kann, so dass ein zusätzlicher Klebstoff nicht erforderlich wäre. Das Auftragen kann mittels Rakel und/oder Walzenauftrag und/oder per Extrusion bzw. Koextrusion und/oder Spritzen auf das Vlies 12, 24 erfolgen.

Wird zuvor von einer Sperrschicht oder -folie bzw. migrationshemmenden Schicht gesprochen, so ist darauf hinzuweisen, dass diese selbst aus einem Schichtsystem bestehen kann, das als Sperrschicht oder -folie bzw. migrationshemmende Schicht bzw. -folie zu bezeichnen ist. Das Schichtsystem, das entsprechend der Fig. 1 und 2 mit 14 gekennzeichnet ist, besteht dabei aus einer mittleren Schicht 114, die die migrationshemmende Wirkung ausübt und insbesondere aus einem Material aus der Gruppe Polyamid, Copolyamid, thermoplastisches Polyamid (TPE-A), Polyethylennaphthalat (PET) besteht oder dieses Material enthält. Die Schicht 114 wird beidseitig von einer Haftvermittlerschicht bzw. einem Kleber 116, 118 abgedeckt. Auf der Kleber- bzw. Haftvermittlerschicht 116, 118 ist sodann jeweils eine Deckschicht 120, 122 aufgebracht, die aus einem Polyolefin bestehen sollte, wobei insbesondere als Material eines aus der Gruppe PP (Polypropylen), PE (Polyethylen), LDPE (Polyethylen mit niedriger Dichte) oder HDPE (Polyethylen mit hoher Dichte) zu nennen ist. Dieses Schichtsystem, das die erste Schicht 14 bildet, und auch als Sperrfolie bezeichnet ist, wird sodann mittels des reaktiven weichmacherbeständigen Klebstoffs 16 mit dem Vlies 12 bzw. über die selbstklebende Haftschicht 20 mit einem Untergrund verbunden.

Das Bi- bzw. Trilaminat, wie dieses anhand der Fig. 1 bis 4 und unter Berücksichtigung der Fig. 5 erläutert worden ist, wird insbesondere im Zusammenhang mit Dachbahnen verwendet, wobei das Vlies 12 mit einer entsprechenden und in den Figuren mit dem Bezugszeichen 22 versehenen Dachbahn verkrallt ist, um eine sichere Verbindung herzustellen.

Um große Flächen abzudecken bzw. abzudichten, müssen entsprechende Abdeck- wie Dachbahneinheiten nebeneinander verlegt werden. Um diese gegeneinander abzudichten, bestehen verschiedene Möglichkeiten, die den Fig. 6 bis 8 zu entnehmen sind.

In Fig. 6 sind entsprechende mit dem Bezugszeichen 222 und 224 bezeichnete Dachbahneinheiten nebeneinander angeordnet. Die aneinandergrenzenden Ränder werden von einem Streifen 226 abgedeckt, der sodann mit den Dachbahnen 22 verschweißt wird. Die Streifen 226 sollten aus gleichem Material wie die Dachbahn 22 bestehen.

Den Fig. 7 und 8 ist eine besonders hervorzuhebende Ausführungsform zu entnehmen, um Dachbahneinheiten 322, 324 miteinander zu verschweißen. Wie sich aus der Fig. 8 ergibt, weist eine der Dachbahneinheiten, und zwar die Dachbahneinheit 324, einen Schweißrand 326 auf, der Randabschnitt der rechten Dachbahn 22 ist. Somit verläuft das Bi- bzw. Trilaminat 10, 30, 100, 300 versetzt zum äußeren Rand 328 der Dachbahn 22 und die Unterseite des Schweißrandes 326 ist somit unbedeckt. Der Schweißrand 326 wird auf den Rand der Dachbahn 22 der benachbarten Dachbahneinheit 322 gelegt und sodann mit der Dachbahn 22 verschweißt. In diesem Randbereich kann das Bi- bzw. Trilaminat 10, 30, 100, 300 bündig zum äußeren Rand 330 der Dachbahn 22 verlaufen. Ein Abstand z.B. zwischen 0,5 cm und 2 cm zwischen Bi- bzw. Trilaminatrand und Rand 330 der Dachbahn 22 kann selbstverständlich auch bestehen.

Der Abstand A zwischen dem Bi- bzw. Trilaminat 10, 30, 100, 300 und dem äußeren Rand 328 des Schweißrandes 326 sollte im Bereich zwischen 5 cm und 6 cm liegen. Zurückversetzt zu dem äußeren Rand 332 des Bi- bzw. Trilaminats 10, 30, 100, 300 sollte sodann die Selbstklebeschicht 20 verlaufen. Der Abstand B liegt bevorzugterweise im Bereich zwischen 1 cm und 2 cm.

Wurde die Erfindung in bevorzugter Weise anhand eines abzudeckenden Dachs erläutert, so wird hierdurch die erfindungsgemäße Lehre nicht eingeschränkt. Vielmehr gilt diese für sämtliche Anwendungsfälle, bei denen Flächen abgedeckt werden sollen, also insbesondere beliebige Gebäudeflächen, abzudichtende Freiflächen oder Flächen eines Pools.

## Patentansprüche

1. Abdecklaminat oder -schichtsystem (10, 30, 100, 300) zur Verwendung des Abdeckens oder Abdichtens eines Elements, wie eines Bauwerks, insbesondere eines Dachs, umfassend zumindest
- eine elementseitig verlaufende erste Schicht (14, 28) in Form einer Sperrschicht oder -folie, die gegenüber zumindest einem Material aus der Gruppe Bitumen, expandiertes Polystyrol, Weichmacher migrationshemmend ist, und
- eine elementfemliegend verlaufende zweite Schicht (12) in Form eines ersten Vlieses, das zum Verbinden mit einer Bauwerksabdeckung vorgesehen ist,
wobei entweder die erste Schicht mittels eines reaktiven weichmacherbeständigen Klebstoffs (16) oder bei Ausbildung der ersten Schicht als thermoplastische Schmelzklebefolie mittels dieser mit der zweiten Schicht verbunden ist.

2. Abdecklaminat oder -schichtsystem nach Anspruch 1,
**dadurch gekennzeichnet,**
**dass** entlang elementseitig verlaufender Seite der ersten Schicht (14, 28) eine dritte Schicht (24) in Form eines zweiten Vlieses verläuft.

3. Abdecklaminat oder -schichtsystem nach zumindest Anspruch 2,
**dadurch gekennzeichnet,**
**dass** die dritte Schicht (24) mit der ersten Schicht (14, 28) über einen Klebstoff (26) oder durch Ausbilden der ersten Schicht (12) als thermoplastische Schmelzklebefolie verbunden ist.

4. Abdecklaminat oder -schichtsystem nach zumindest einem der vorhergehenden Ansprüche,
**dadurch gekennzeichnet,**
**dass** der Klebstoff (16, 26) ein reaktiver weichmacherbeständiger Schmelzklebstoff ist, wobei insbesondere der reaktive weichmacherbeständige Schmelzklebstoff (16, 26) auf PUR (Polyurethan) basiert und insbesondere ein 1-Komponenten-Schmelzklebstoff oder Mehr-Komponenten-Schmelzklebstoff, insbesondere 2-Komponenenten-Schmelzklebstoff ist, oder der weichmacherbeständige Schmelzklebstoff ein polyolefinischer thermoplastischer Klebstoff bzw. Klebstoffschmelze ist, insbesondere auf Basis von Polyethylen (PE).

5. Abdecklaminat oder -schichtsystem nach zumindest einem der vorhergehenden Ansprüche,
**dadurch gekennzeichnet,**
**dass** das erste und/oder das zweite Vlies (12, 24), insbesondere das erste und das zweite Vlies, aus zumindest einem Material auf PES (Polyester) oder auf einem Homo- oder Copolymeren von Ethylen und/oder Propylen oder auf PA (Polyamid) oder auf Viskose oder auf PET (Polyethylenterephthalat) oder auf PUR (Polyurethan), insbesondere auf PET (Polyethylenterephthalat) basiert.

6. Abdecklaminat oder -schichtsystem nach zumindest einem der vorhergehenden Ansprüche,
**dadurch gekennzeichnet,**
**dass** das Vlies (12, 24) eine Dicke dᵥ mit 0,1 mm ≤ dᵥ ≤ 5 mm, insbesondere 0,15 mm ≤ dᵥ ≤ 0,3 mm, und/oder eine Grammatur G mit 5 g/m² ≤ G ≤ 1000 g/m², insbesondere 20 g/m² ≤ G ≤ 50 g/m², aufweist.

7. Abdecklaminat oder -schichtsystem nach zumindest einem der vorhergehenden Ansprüche,
**dadurch gekennzeichnet,**
**dass** die Sperrschicht bzw. -folie (14) aus zumindest einem Material aus der Gruppe PA (Polyamid), Copolyamid, thermoplastisches Polyamid (TPE-A), PET (Polyethylenterephthalat), EVOH (Copolymer aus Ethylen und Vinylalkohol), PP (Polypropylen), PE (Polyethylen), PVDC (Polyvinylidenchlorid), PVDF (Polyvinylidenfluorid), PAN (Polyacrylnitril), PEN (Polyethylennaphthalat), PC (Polycarbonat)besteht oder zumindest ein solches enthält,
oder dass die Sperrschicht bzw. -folie (28) in Form einer thermoplastischen Schmelzklebefolie auf Thermoplasten und/oder thermoplastischen Elastomeren basiert, bevorzugt ausgewählt aus einer der Gruppen bestehend aus
- Polyethylen (PE), Polyethylen mit niedriger Dichte (LDPE), Ethylen/Vinylacetat-Copolymer (EVA), Polybuten (PB);
- thermoplastische Elastomere auf Olefinbasis (TPE-O, TPO) wie Ethylen-Propylen-Dien/Polypropylen-Copolymere;
- vernetzte thermoplastische Elastomere auf Olefinbasis (TPE-V, TPV);
- thermoplastische Polyurethane (TPE-U, TPU) wie TPU mit aromatischen Hartsegmenten und Polyester Weichsegmenten (TPU-ARES), Polyether Weichsegmente (TPU-ARET), Polyester- und Polyether-Weichsegmenten (TPU-AREE) oder Polycarbonat-Weichsegmenten (TPU-ARCE);
- thermoplastische Copolyester (TPE-E, TPC) wie TPC mit Polyester-Weichsegmenten (TPC-ES), Polyether Weichsegmenten (TPC-EE);
- Styrol Block-Copolymere (TPE-S, TPS) wie Styrol/Butadien-Block-Copolymer (TPS-SBS), Styrol/Isopren-Block-Copolymer (TPS-SIS), Styrol/Ethylen-Butylen/Styrol-Block-Copolymere (TPS-SEBS), Styrol/Ethylen-Propylen/Styrol-Block-Copolymere (TPS-SEPS);
- thermoplastische Copolyamide (TPE-A, TPA), insbesondere thermoplastische Copolyamide (TPE-A, TPA) und thermoplastische Polyurethane (TPE-U, TPU),
wobei insbesondere die Sperrschicht ein Schmelzkleber auf der Basis von Polyamid (PA) ist.

8. Abdecklaminat oder -schichtsystem nach zumindest einem der vorhergehenden Ansprüche,
**dadurch gekennzeichnet,**
**dass** die Sperrschicht bzw. -folie (14, 28) eine Dicke ds mit 5 µm ≤ ds ≤ 100 µm, insbesondere 15 µm ≤ ds ≤ 50 µm aufweist und/oder ein- oder mehrlagig ausgebildet ist.

9. Verwendung des Abdecklaminats oder -schichtsystems (10, 30, 100, 300) nach zumindest Anspruch 1 für eine Bauwerksabdichtung, insbesondere als Dachabdeckung und/oder -dichtung, wobei das Abdecklaminat oder -schichtsytem bauwerkfemliegend mit einer Dachbahn (22) verbunden ist und/oder bauwerkseitig eine selbstklebende oder verschweißbare Schicht (20) aufweist, wobei insbesondere die Schicht (20) zumindest aus einem Material aus der Gruppe Bitumen, Butyl, SBR, Elastomer oder Kombinationen dieser oder aus einer Schweißmasse basierend auf Polymerbitumen besteht.

10. Verwendung nach Anspruch 9,
**dadurch gekennzeichnet,**
**dass** die Dachbahn (22) aus zumindest einem Material aus der Gruppe PVC (Polyvinylchlorid), TPE (Thermoplastisches Elastomer), TPO (Thermoplastisches Elastomer auf Olefinbasis), TPV (Thermoplastisches Vulkanisat), EPDM (Ethylen-Propylen-Dien-Kautschuk), EVA (Ethylenvinylacetat), PP (Polypropylen), PE (Polyethylen), PA (Polyamid) besteht oder zumindest eines dieser Materialien enthält.

11. Verfahren zur Herstellung eines Abdecklaminats oder -schichtsystems (30, 300), für eine Bauwerksabdeckung nach zumindest einem der Ansprüche 1 bis 8, **gekennzeichnet durch** die Verfahrensschritte
- Erhitzen der der zweiten Schicht (12) zugewandten ersten Schicht (28) in Form einer thermoplastischen Schmelzklebefolie und bei Verwendung der dritten Schicht (24) zusätzliches Erwärmen der der dritten Schicht zugewandten Seite der ersten Schicht,
- Aufeinanderlegen der Schichten und durch Druck Verbinden der einzelnen Schichten,
oder **gekennzeichnet durch** die Verfahrensschritte
- Beschichten der einander zugewandten Seiten der ersten und der zweiten Schicht (12, 14) und bei Verwendung der dritten Schicht (24) zusätzliches Beschichten der einander zugewandten Seiten der ersten und dritten Schicht mit einem Klebstoff (16,26),
- Aufeinanderlegen der Schichten und Aushärten des Klebstoffs.

12. Verfahren nach Anspruch 11,
**dadurch gekennzeichnet,**
**dass** zum Verbinden der zweiten Schicht (12) mit einer Dachbahn (22) das Abdecklaminat bzw. -schichtsystem (10, 100) erhitzt wird.

13. Verfahren nach zumindest Anspruch 11,
**dadurch gekennzeichnet,**
**dass** als Klebstoff (16, 26) ein reaktiver weichmacherbeständiger Schmelzklebstoff verwendet wird, der insbesondere mittels Rakel, Walzenauftrag und/oder Extrusion aufgetragen wird.

14. Verfahren nach Anspruch 11 bzw. Abdecklaminat bzw. -schichtsystem nach zumindest einem der Ansprüche 1 bis 8,
**dadurch gekennzeichnet,**
**dass** das Vlies (12, 24) mit Superabsorbern oder quellfähigen Polymeren versetzt wird bzw. ist.

15. Verfahren nach Anspruch 11 bzw. Abdecklaminat bzw. -schichtsystem nach zumindest einem der Ansprüche 1 bis 8,
**dadurch gekennzeichnet,**
**dass** die erste Schicht (12) aus einem Schichtsystem besteht bzw. aus diesem hergestellt wird, das aus einer die migrationshemmende Wirkung ausübenden mittleren Schicht (114) besteht, entlang deren Außenseiten jeweils eine Deckschicht (120, 122) verläuft, die insbesondere aus einem Polyolefin besteht, wobei vorzugsweise die Deckschicht (120, 122) mit der mittleren Schicht (114) über einen Kleber bzw. Haftvermittlerschicht (116, 118) verbunden wird bzw. ist.

## Claims

1. A cover laminate or cover layer system (10, 30, 100, 300) used for covering or sealing an element such as a structure, in particular a roof, comprising at least
- a first layer (14, 28), which extends on the element side, in the form of a migration-inhibiting barrier layer or barrier film with respect to at least one material from the group consisting of bitumen, expanded polystyrene, plasticizer, and
- a second layer (12), which extends on the side away from the element, in the form of a first nonwoven, which is intended for connecting with a cover for a structure,
wherein the first layer is connected to the second layer either by means of a reactive plasticizer-resistant adhesive (16), or, in the case of formation of the first layer as a thermoplastic hot-melt adhesive film, by means of said film.

2. The cover laminate or cover layer system according to claim 1,
**characterized in that**
along the side of the first layer (14, 28) which extends on the element side, a third layer (24) in the form of a second nonwoven extends.

3. The cover laminate or cover layer system according to at least claim 2,
**characterized in that**
the third layer (24) is connected to the first layer (14, 28) via an adhesive (26) or by formation of the first layer (12) as a thermoplastic hot-melt adhesive film.

4. The cover laminate or cover layer system according to at least one of the proceeding claims, **characterized in that**
the adhesive (16, 26) is a reactive plasticizer-resistant hot-melt adhesive, wherein, in particular, the reactive plasticizer-resistant hot-melt adhesive (16, 26) is based on PUR (polyurethane) and, in particular, is a 1-component hot-melt adhesive or a multi-component hot-melt adhesive, in particular a 2-component hot-melt adhesive, or the plasticizer-resistant hot-melt adhesive is a polyolefinic thermoplastic adhesive or adhesive melt, in particular based on polyethylene (PE).

5. The cover laminate or cover layer system according to at least one of the proceeding claims, **characterized in that**
the first and/or second nonwoven (12, 24), in particular the first nonwoven and the second nonwoven, made of at least one material, is based on PES (polyester) or on a homopolymer or copolymer of ethylene and/or propylene or on PA (polyamide) or viscose or on PET (polyethylene terephthalate) or on PUR (polyurethane), in particular on PET (polyethylene terephthalate).

6. The cover laminate or cover layer system according to at least one of the proceeding claims, **characterized in that**
the nonwoven (12, 24) has a thickness dᵥ such that 0.1 mm ≤ dᵥ ≤ 5 mm, in particular 0.15 mm ≤ dᵥ ≤ 0.3 mm, and/or a grammage G of 5 such that g/m² ≤ G ≤1000 g/m², in particular 20 g/m² ≤ G ≤ 50 g/m².

7. The cover laminate or cover layer system according to at least one of the proceeding claims, **characterized in that**
the barrier layer or barrier film (14) consists of a material from the group consisting of PA (polyamide), copolyamide, thermoplastic polyamide (TPE-A), PET (polyethylene terephthalate), EVOH (ethylene vinyl alcohol copolymer), PP (polypropylene), PE (polyethylene), PVDC (polyvinylidene chloride), PVDF (polyvinylidene fluoride), PAN (polyacrylonitrile), PEN (polyethylene naphthalate), PC (polycarbonate) or at least contains such a material,
or that the barrier layer or barrier film (28), in the form of a thermoplastic hot-melt adhesive film, is based on thermoplastics and/or thermoplastic elastomers, preferably selected from one of the groups consisting of
- polyethylene (PE), low-density polyethylene (LDPE), ethylene/vinyl acetate copolymer (EVA), polybutene (PB);
- olefin-based thermoplastic elastomers (TPE-O, TPO) such as ethylene-propylene-diene/polypropylene copolymers;
- crosslinked olefin-based thermoplastic elastomers (TPE-V, TPV);
- thermoplastic polyurethanes (TPE-U, TPU) such as TPU with aromatic hard segments and polyester soft segments (TPU-ARES), polyether soft segments (TPU-ARET), polyester and polyether soft segments (TPU-AREE) or polycarbonate soft segments (TPU-ARCE);
- thermoplastic copolyesters (TPE-E, TPC) such as TPC with polyester soft segments (TPC-ES), polyether soft segments (TPC-EE);
- styrene block copolymers (TPE-S, TPS) such as styrene/butadiene block copolymers (TPS-SBS), styrene/isoprene block copolymers (TPS-SIS), styrene/ethylenebutylene/styrene block copolymers (TPS-SEBS), styrene/ethylene-propylene/styrene block copolymers (TPS-SEPS);
- thermoplastic copolyamides (TPE-A, TPA), in particular thermoplastic copolyamides (TPE-A, TPA), and thermoplastic polyurethanes (TPE-U), TPU),
wherein, in particular, the barrier layer is a hot-melt adhesive based on polyamide (PA).

8. The cover laminate or cover layer system according to at least one of the proceeding claims, **characterized in that**
the barrier layer or barrier film (14, 28) has a thickness ds such that 5 µm ≤ ds ≤ 100 µm, in particular 15 µm ≤ ds ≤ 50 µm, and/or is designed to be single-layered or multi-layered.

9. A use of the cover laminate or cover layer system (10, 30, 100, 300) according to at least claim 1 for sealing a structure, in particular as a roof cover and/or a roof seal, wherein the cover laminate or cover layer system is connected on the side away from the structure to a roofing sheet (22) and/or comprises a self-adhesive or weldable layer (20) on the structure side, wherein the layer (20) consists of at least one material from the group consisting of bitumen, butyl, SBR, elastomer or combinations thereof or of a welding composition based on polymer bitumen.

10. The use according to claim 9,
**characterized in that**
the roofing sheet (22) consists of at least one material from the group consisting of PVC (polyvinyl chloride), TPE (thermoplastic elastomer), TPO (olefin-based thermoplastic elastomer), TPV (thermoplastic vulcanizate), EPDM (ethylene propylene diene rubber), EVA (ethylene vinyl acetate), PP (polypropylene), PE (polyethylene), PA (polyamide) or

11. A method for producing a cover laminate or a cover layer system (30, 300) according to at least claim 1, intended for covering a structure,
**characterized by** the method steps of
- heating of the first layer (28) in the form of a thermoplastic hot-melt adhesive, which faces the second layer (12), and, in the case of the use of the third layer (24), additional heating of the side of the first layer which faces the third layer,
- placement of the layers one on top of the other and connecting of the individual layers by pressure,
or **characterized by** the method steps of
- coating of the sides of the first and of the second layer (12, 24) which face one another, and, in the case of the use of the third layer (24), additional coating of the sides of the first and of the third layer which face one another with an adhesive (16, 26),
- placing of the layers one on top of the other and curing of the adhesive.

12. The method according to claim 11,
**characterized in that**,
for the connection of the second layer (12) to a roofing sheet (22), the cover laminate or cover layer system (10, 100) is heated.

13. The method according to at least claim 11,
**characterized in that**,
as adhesive (16, 26), a reactive plasticizer-resistant hot-melt adhesive is used, which is applied, in particular, by means of a spreading knife, roller application and/or extrusion.

14. The method according to claim 11, or the cover laminate or cover layer system according to at least one of the claims 1 to 8,
**characterized in that**
the nonwoven (12, 24) is to be or is mixed with superabsorbent polymers or swellable polymers.

15. The method according to claim 11, or the cover laminate or cover layer system according to at least one of the claims 1 to 8,
**characterized in that**
the first layer (12) consists of a layer system or is produced from said layer system which consists of a central layer (114) exerting the migration-inhibiting action, along the outer sides of which in each case a covering layer (120, 122) extends, which, in particular, consists of a polyolefin, wherein the covering layer (120, 122) is to be or is preferably connected to the central layer (114) via an adhesive or adhesion-promoting layer (116, 118).

## Revendications

1. Laminé ou système en couche de recouvrement (10, 30, 100, 300) destiné au recouvrement ou à l'étanchéification d'un élément tel qu'un ouvrage, notamment une toiture, comprenant au moins
- une première couche (14, 28) s'étendant du côté de l'élément, sous forme de couche barrière ou film barrière qui est inhibiteur de migration par rapport à au moins un matériau appartenant aux groupes des bitume, polystyrène expansé, plastifiant, et
- une deuxième couche (12) éloignée de l'élément, sous forme d'un premier non-tissé qui est prévu pour être relié à un recouvrement de l'ouvrage,
sachant que soit la première couche est reliée à la deuxième couche au moyen d'une colle (16) réactive, résistant aux plastifiants, soit la première couche est reliée à la deuxième lors de la constitution de la première couche sous forme de film adhésif fusible thermoplastique, au moyen dudit film.

2. Laminé ou système en couche de recouvrement selon la revendication 1,
**caractérisé en ce**
**qu'**une troisième couche (24) sous forme d'un second non-tissé s'étend le long du côté de la première couche (14, 28), situé du côté de l'élément.

3. Laminé ou système en couche de recouvrement selon au moins la revendication 2,
**caractérisé en ce**
**que** la troisième couche (24) est reliée à la première couche (14, 28) au moyen d'une colle (26) ou par le biais de la constitution de la première couche (12) sous forme de film adhésif fusible, thermoplastique.

4. Laminé ou système en couche de recouvrement selon au moins une des revendications précédentes,
**caractérisé en ce**
**que** la colle (16, 26) est une colle fusible réactive, résistant aux plastifiants, sachant que notamment la colle fusible réactive, résistant aux plastifiants (16, 26) est à base de PUR (polyuréthane) et est notamment une colle fusible mono-composant ou une colle fusible multi-composant, notamment une colle fusible bi-composant, ou que la colle fusible résistant aux plastifiants est une colle thermoplastique ou une masse fondue de colle polyoléfinique, notamment à base de polyéthylène (PE).

5. Laminé ou système en couche de recouvrement selon au moins une des revendications précédentes,
**caractérisé en ce**
**que** le premier et/ou le second non-tissé (12, 24), notamment le premier et le second tissés, sont constitués d'au moins un matériau à base de PES (polyester) ou à base d'un homopolymère ou copolymère d'éthylène et/ou de propylène ou à base de PA (polyamide) ou à base de viscose ou à base de PET (polyéthylènetéréphtalate) et à base de PUR (polyuréthane), notamment de PET (polyéthylènetéréphtalate).

6. Laminé ou système en couche de recouvrement selon au moins une des revendications précédentes,
**caractérisé en ce**
**que** le non-tissé (12, 24) présente une épaisseur dᵥ avec 0,1 mm < dᵥ < 5 mm, notamment 0,15 mm < dv < 0,3 mm et/ou un grammage G avec 5 g/m² < G < 1000 g/m², notamment 20 g/m² < G < 50 g/m²

7. Laminé ou système en couche de recouvrement selon au moins une des revendications précédentes,
**caractérisé en ce**
**que** la couche ou le film barrière (14) est constitué(e) d'un matériau appartenant au groupe des PA (polyamide), copolyamide, polyamide thermoplastique (TPE-A), PET (polyéthylènetéréphtalate), EVOH (copolymère d'éthylène et d'alcool de vinyle), PP (polypropylène), PE (polyéthylène), PVDC (chlorure de polyvinylidène), PVDF (polyvinylidènefluorure), PAN (polyacrylonitrile), PEN (polyéthylène naphtalate), PC (polycarbonate) ou contient au moins un de ces composants, ou que la couche ou le film barrière (28) sous forme de film fusible thermoplastique est à base de thermoplastiques et/ou d'élastomères thermoplastiques et est sélectionné de préférence parmi un des groupes comprenant
- polyéthylène (PE), polyéthylène à faible densité (LDPE), copolymère d'éthylène/acétate de vinyle (EVA), polybutène (PB) ;
- élastomères thermoplastiques à base d'oléfine (TPE-O, TPO) tels que les copolymères d'éthylène-propylène-diène/polypropylène ;
- élastomères thermoplastiques réticulés à base d'oléfine (TPE-V, TPV) ;
- polyuréthanes thermoplastiques (TPE-U, TPU) tels que TPU avec segments durs aromatiques et segments mous de polyester (TPU-ARES), segments mous de polyéther (TPU-ARET), segments mous de polyester et de polyéther (TPU-AREE) ou segments mous de polycarbonate (TPU-ARCE);
- copolyesters thermoplastiques (TPE-E, TPC) tels que TPC avec segments mous de polyester (TPC-ES), segments mous de polyéther (TPC-EE) ;
- copolymère de styrène séquencé (TPE-S, TPS) tels que polymère de styrène/butadiène séquencé (TPS-SBS), copolymère de styrène/isoprène séquencé (TPS-SIS), copolymère de styrène/éthylène-butylène/styrène séquencé (TPS-SEBS), copolymère de styrène/éthylène-propylène/styrène séquencé (TPS-SEPS) ;
- copolyamides thermoplastiques (TPE-A, TPA), notamment copolyamides thermoplastiques (TPE-A, TPA) et polyuréthanes thermoplastiques (TPE-U, TPU),
sachant que notamment la couche barrière est une colle fusible à base de polyamide (PA).

8. Laminé ou système en couche de recouvrement selon au moins une des revendications précédentes,
**caractérisé en ce**
**que** la couche ou le film barrière (14, 28) présente une épaisseur ds avec 5 µm < ds < 100 µm, notamment 15 µm < ds < 50 µm ou est constitué d'une ou de plusieurs couches.

9. Utilisation d'un laminé ou système en couche de recouvrement (10,30, 100,300) selon au moins la revendication 1 pour l'étanchéification d'un ouvrage, notamment comme recouvrement et/ou isolation de toiture, sachant que le laminé ou système en couche de recouvrement est relié à la membrane de toiture (22) loin de l'ouvrage et/ou présente une couche autocollante ou soudable (20) du côté de l'ouvrage, sachant que notamment la couche (20) est composée d'au moins un matériau appartenant au groupe des bitume, butyle, SBR, élastomère ou de combinaisons de ceux-ci ou est composée d'une masse de soudure à base de polymère de bitume.

10. Utilisation selon la revendication 9,
**caractérisée en ce**
**que** la membrane de toiture (22) est composée d'au moins un matériau appartenant au groupe des PVC (chlorure de vinyle), TPE (élastomère thermoplastique), TPO (élastomère thermoplastique à base d'oléfine), TPV (vulcanisat thermoplastique), EPDM (caoutchouc éthylène-propylène-diène), EVA (éthylène-acétate de vinyle). PP (polypropylène), PE (polyéthylène), PA (polyamide) ou contient au moins un de ces matériaux.

11. Procédé de fabrication d'un laminé ou d'un système en couche de recouvrement (30, 300) pour le recouvrement d'un ouvrage selon au moins une des revendications 1 à 8 **caractérisé par** les étapes suivantes
- chauffe de la première couche (28) tournée vers la seconde couche (12), sous forme de film fusible thermoplastique et, en cas d'utilisation de la troisième couche (24), chauffe supplémentaire du côté de la première couche, tourné vers la troisième couche,
- superposition des couches et liaison des différentes couches par pression, ou **caractérisé par** les étapes suivantes
- revêtement des côtés se faisant face, de la première et de la deuxième couches (12, 14) et, en cas d'utilisation de la troisième couche (24), application supplémentaire d'une colle (16, 26) sur les côtés se faisant face, de la première et de la troisième couches,
- superposition des couches et durcissement de la colle.

12. Procédé selon la revendication 11,
**caractérisé en ce**
**que** le laminé ou système en couche de recouvrement est chauffé (10, 100) pour relier la deuxième couche (12) à une membrane de toiture (22).

13. Procédé selon la revendication 11,
**caractérisé en ce**
**qu'**est utilisée comme colle (16, 26) une colle réactive fusible, résistant aux plastifiants qui est enduite notamment au moyen d'une racle, par enduction au rouleau et/ou extrusion.

14. Procédé selon la revendication 11 ou laminé ou système en couche de recouvrement selon au moins une des revendications 1 à 8,
**caractérisé en ce**
**que** le non-tissé (12, 24) est mélangé à des superabsorbants ou polymères aptes au gonflement.

15. Procédé selon la revendication 11 ou laminé ou système en couche de recouvrement selon au moins une des revendications 1 à 8,
**caractérisé en ce**
**que** la première couche (12) est constituée d'un système en couche ou est fabriquée à partir de celui-ci qui est constitué d'une couche médiane (114) exerçant un effet inhibiteur de migration le long des côtés extérieurs de laquelle s'étend respectivement une couche de recouvrement (120, 122) qui est constituée notamment d'une polyoléfine, sachant que de préférence la couche de recouvrement (120, 122) est ou se trouve reliée à la couche médiane (114) par le biais d'une colle ou d'une couche d'agent adhésif (116, 118).
